# EUROPEAN PATENT APPLICATION

(11) **EP 2 924 560 A1**
(43) Date of publication of application: **30.09.2015**
(21) Application number: 14162368.6
(22) Date of filing: 28.03.2014
(51) Int. Cl.: G06F 9/44

(54) **Apparatus and process for automating discovery of effective algorithm configurations for data processing using evolutionary graphical search**

(71) Applicant: ForecasstThis Ltd, St. Albans, Hertfordshire AL1 4JY (GB)
(72) Inventor: Washtell, Justin, Raunds, Northamptonshire NN9 6HU (GB)

(57) **Abstract**

An apparatus and process to aid automatic discovery of effective configurations of software modules, for applications such as process control, signal processing, data science, and general software engineering. The invention entails application of an evolutionary algorithm to the manipulation of a directed acyclic graph (DAG) (4) which encodes a set of software module configurations (8), wherein any set of configurations may share common sub-processes by virtue of sharing sub-graphs.

## Description

### BACKGROUND AND FIELD OF THE INVENTION

Many software systems can be cast as a flow of data between interconnecting modules, wherein each module is a "black box" which manipulates or generates data according to some internal set of rules. Such a system can be conveniently represented as a graph (8) in which the nodes (5,6) represent modules, and the edges between the nodes (7) represent the channels via which data flows. The software engineering task then amounts to designing such a graph, by arranging pre-existing modules into a configuration which approximates the most effective solution to a given problem.

Typically, modules have strictly "typed" inputs and outputs, putting syntactic constraints on the configuration contexts within which they can be used. This is exploited most notably in fourth generation languages (4GLs) where the module configuration is often represented and manipulated visually, and clear constraints are put on the ways in which modules can be linked together. Such 4GLs have lowered the bar for software engineering and lessened the requirement for traditional programming language expertise. A recently case in point is the powerful programming environment *Scratch,* developed at MIT and intended for use by primary school children.

In designing any solution, typically a software engineer applies a deep understanding of the specific problem at hand, along with an understanding of the function or outward behaviour of the software modules at his or her disposal. However it is not uncommon for the engineer to apply a certain amount of trial and error in searching for effective configurations, and rather than having an intimate understanding of the behaviour of the modules, to have merely a familiarity with their typical uses. This is particularly true in the emerging fields of data science, where it is typically unknown exactly how the desired output of the system should relate to the inputs, nor which modules or configuration of modules is likely to be most effective. Popular 4GL's which encourage the experimental design of data mining solutions include *Rapid Miner, Orange,* and *KNIME,* the latter of which is discussed in US2013332449 detailed in the prior art section of the present document.

Partly in response to the data science challenge, Machine Learning (ML) has ushered in algorithms which are capable of *automatically* deducing rules or behaviours for mapping a given set of inputs to an appropriate set of outputs, through the provision of example sets of inputs and their corresponding expected outputs. This process is known as *supervised learning* because the behaviour of the algorithm improves on the basis of being "told" what the correct output should be, similarly to in a traditional teacher-pupil relationship or when learning by rote.

While ML research has led to some incredibly adaptable "black box" algorithms - many of which can now be found in popular data mining 4GLs - it exacerbates the problems associated with designing effective *configurations* of algorithms.

This is firstly because ML algorithms can be very sophisticated: the behaviour of any given algorithm may only be fully understood by a handful of experts in the field; and indeed there are algorithms in use whose practical behaviour may not be fully understood by *anybody -* rather it may be only the mathematical theories underpinning their learning capabilities which are well understood.

Related to this is the fact that the precise behaviour of ML algorithms can vary significantly depending upon the problem (or the specific data representative of that problem) to which they are applied, and also to the specific configuration context in which they are used; and indeed the behaviour of such algorithms may tend to vary over time as they "learn".

Well behaved algorithms in inexperienced hands, or extremely powerful and adaptable algorithms in any hands - as both outlined above - present a similar challenge. In the former case, long-established software engineering principles might not be applied; in the latter case, they may not be applicable. The result in either case is similar: excessive human effort is expended in the form of trial and error, and the resultant solutions may be considerably less than optimal.

The present invention is designed to solve this problem by providing a means of automating any software design process that can be framed as the configuration of software modules in a graph.

### STATEMENT OF THE INVENTION

An apparatus and process to aid automatic discovery of effective configurations of software modules, for applications such as process control, signal processing, data science, and general software engineering. The invention entails application of an evolutionary algorithm to the manipulation of a directed acyclic graph (DAG) (4) which encodes a set of software module configurations (8), wherein any set of configurations may share common sub-processes by virtue of sharing sub-graphs.

### BRIEF DESCRIPTION OF THE DRAWINGS

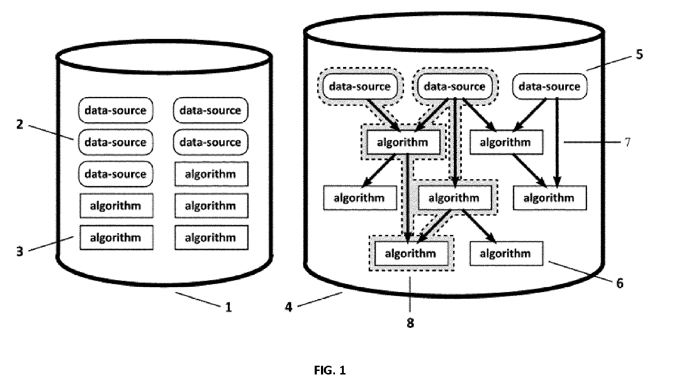

FIG. 1 depicts an example module repository (1) containing a selection of anonymous modules comprising data sources (2) and algorithms (3), and an example directed acyclic graph (4) comprising nodes hosting such modules (5,6), wherein each node is either a root node (5) or a non-root node (6), and wherein the nodes are connected in such a way (7) that data flows away from the root nodes. Also depicted, by means of a broken outline, is an example configuration (8) comprising a connected sub-graph within the DAG.

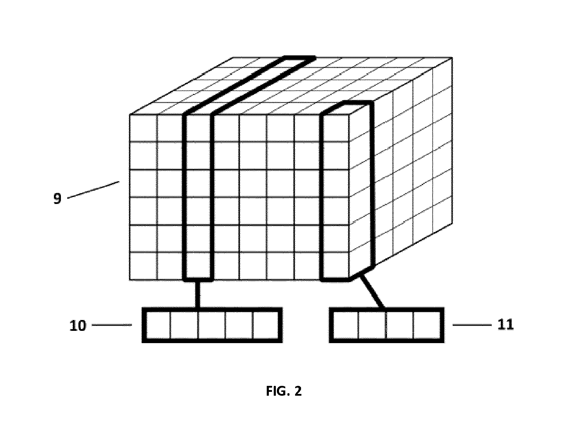

FIG. 2 depicts an example data structure as consumed or produced by a software module. The example data structure has 240 data elements arranged in a three dimensional array (9). It has 5 items of metadata associated with one element of one of its dimensions (10), and 4 items of metadata associated with one element of one of its dimensions (11).

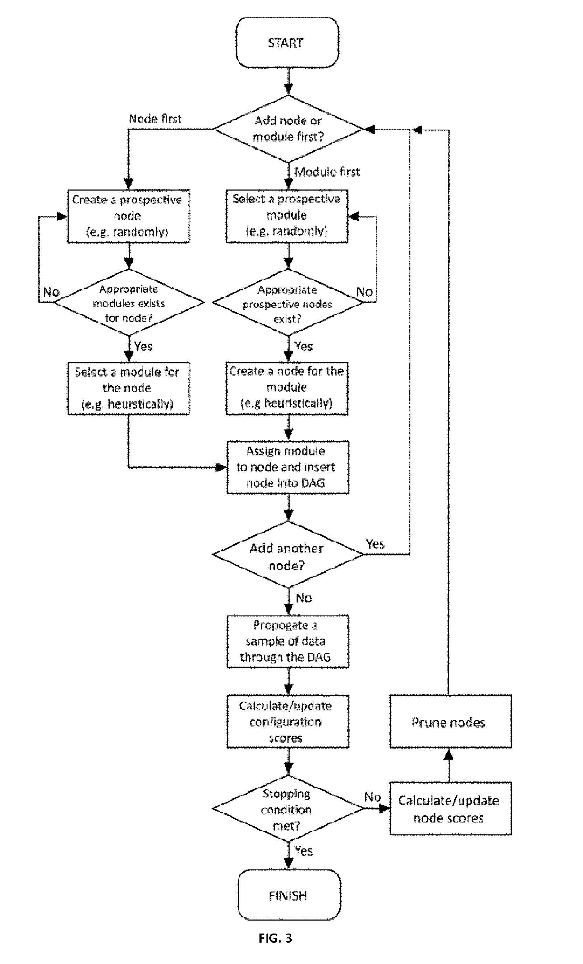

FIG. 3 is a flow diagram illustrating the method which is described in detail in the following section of this document.

### DETAILED DESCRIPTION OF THE APPARATUS

The necessary apparatus for the invention comprises a set of *software modules* stored in a repository (1), and a directed acyclic graph (*DAG*) (4) in which configurations of software-modules can be represented. The specific encoding and physical storage of these components is not pertinent to the essence of the invention. A software repository or simple class path would be pertinent for maintaining the former, and a graph database would be pertinent for maintaining the latter (i.e. both stores on a file system hosted on a physical digital storage device).

For the purposes of the present invention a *software module* is a re-usable package of software functionality, such as is typically represented by a Class in an object oriented software environment. It is distinct from any specific embodiment of such a module, such as is typically known as an Object or a Class Instance in an object oriented software environment and which is typically accompanied by additional data or state information.

We consider a software module to be a *data source* if its role is to generate data (for example in the case of an acoustic signal generator) or to output data that originates from some external source (for example data contained in a file). A software module is considered an *algorithm* and not a data source if its role entails consuming data that is to be provided by one or more other software modules, and optionally outputting data which is based in whole or in part upon that data which it has consumed.

For the purposes of the present invention, data (9) comprises any n-dimensional array of numeric values or object references in which any set of dimensions may have metadata associated with each element of the remaining dimensions (10,11). A typical example of such a structure would be a two-dimensional table in which each cell contains object references, and each column has metadata associated with it (for example indicating the name of the column and the type of data it contains), as does the whole table (for example indicating the original source of the data). In this example, the height of the table constitutes a set of just one dimension, of which each column constitutes one element, and the height and width of the table taken together constitute a set of two dimensions, or which the whole table constitutes one element. It would also be possible to associate additional metadata with the rows and with each individual cell in the table by similar means, but this example does not require it.

Metadata may take any form, but might typically constitute an extensible set of key-value pairs. The dimensionality of a data array and the size of each of its dimensions can be assumed to be implicit metadata that is always present for any given data.

Certain simple input parameters that may be required by a software module (such as a file name provided to a data source) or simple status information provided by any module (for example indicating whether it is ready to produce output) need not considered data nor metadata for the purposes of the present invention.

A configuration of software modules (8) comprises any number of data sources each of which may be connected to any number of algorithms, each of which in turn may be connected to any number of algorithms, and so on, with the restriction that data must always flow away from the data sources, never towards them, in other words that the configuration forms a directed acyclic graph (DAG) with data source serving as the root nodes.

An additional practical restriction is that any algorithm in a configuration must be able to consume some or all of the data output by those modules which immediately precede it. The present invention does not include any specific mechanism for deciding in advance whether a given algorithm may be able to generate any output when preceded by a given set of modules, or that such output may be useful or meaningful. Therefore an additional minimum requirement is that an algorithm, when presented with the metadata associated with the output of modules which are proposed to precede it, is able to declare whether it can consume said data, or that there must be a mechanism for making this judgement on behalf of any algorithm (for example by matching the metadata against input requirements published by every available algorithm).

### DETAILED DESCRIPTION OF THE PROCESS

The purpose of the invention is to find at least one configuration of software modules which best satisfies some application-specific criteria.

Finding configurations proceeds in an iterative manner with employs the general principles of an evolutionary algorithm (EA) (12).

Under the EA analogy, the primary operation employed by the process is one in which any given offspring acquires and extends the entire phenotype of each of its parents, of which it may have any number (note that in the DAG representation, genotype and phenotype are synonymous).

Each iteration of the process involves a *creation step* during which nodes are created in the DAG and assigned software modules, an *evaluation step* during which configurations in the DAG are enumerated and assigned a score according to some application-specific fitness measure based upon their module outputs, and a *pruning step* during which nodes and configurations responsible for producing poor scores are removed from the DAG.

Although the general order of the steps is important, it is not critical which step is executed first within a given iteration, and some of the steps may be omitted entirely during some iterations without affecting the essence of the process.

The steps of each iteration of the process are detailed follows:

### CREATION STEP:

One or more nodes are created each hosting an instance of a software module such that the inputs of these modules connect to the outputs of one or more modules hosted on existing nodes, except in the case that a created module is a data source in which case it does not connect to any existing nodes. There are at least two basic approaches to this: a "node-first" approach and a "module-first" approach, and many other variants may be possible.

In the "node-first" approach a node is first created and its inputs connected to the output of zero or more existing nodes, using some strategy; in one incarnation of the invention, this strategy involves picking connecting nodes randomly; in other incarnations the strategy may employ arbitrarily sophisticated rules or heuristics.

The second step of the "node-first" approach involves selecting a software module that is appropriate for the newly created node, using some strategy; in one incarnation of the invention this strategy involves selecting software modules from the repository in random sequence and testing whether each can produce an output if assigned to the new node, until an appropriate module is found, and if no appropriate module can be found then the node is discarded; in other incarnations of the invention, arbitrarily sophisticated rules and heuristics may be employed in selecting the software module.

In the "module-first" approach a module is first selected and assigned to a new node, using some strategy; in one incarnation of the invention, this strategy involves selecting a module from the repository entirely at random; in other incarnations the strategy may employ arbitrarily sophisticated rules or heuristics.

The second step of the "module-first" approach involves making connections between the input of the new node and the output of existing nodes in such a way that the resultant connections are appropriate to the selected module. Any arbitrarily sophisticated rules and heuristics may be employed in this step. If no appropriate connections can be found, then the node and the module are discarded.

The creation step ends when some stopping criteria are met. In at least one incarnation of the invention, the addition of nodes ceases with some random probability (or after some predetermined random number of nodes have been created), or some resource limit has been reached, whichever occurs first; in other incarnations, any arbitrarily sophisticated rules and heuristics may be employed.

In other incarnations of the invention, the selection of the software module and of the node connections may occur in a concurrent, reciprocal or intertwined fashion. A person skilled in the art will appreciate that there are many potential strategies for specific node creation and module selection, and any such strategy that can be effected within the three-step process outlined here may therefore be employed within the structure of the invention.

### EVALUATION STEP:

In the evaluation step, every sub-graph constituting a valid configuration is assigned a score related to how effective that configuration is in some application-specific sense. A person skilled in the art will appreciate that there are potentially at least as many ways of evaluating the effectiveness of a configuration as there are applications of the invention. The present invention requires only that it must be possible to represent the application-specific effectiveness criteria in the form of:

an evaluation function which can be applied to each configuration so as to provide a score or a rank for each configuration;

additional optional heuristics which can inform the creation step described above so as to favour effective solutions.

In one incarnation of the invention, the evaluation function evaluates a configuration by comparing the output of its terminal nodes to some idealised output, using some application-defined or user-defined similarity function; in another incarnation of the invention, the evaluation function evaluates a configuration by some intrinsic property of the output at its terminal nodes; in yet another incarnation of the invention, the evaluation function compares some part of the output at the terminal nodes to some other part of the output at the terminal nodes, using some application-defined or user-defined similarity function (this approach may be appropriate in a supervised machine learning setting, for example, where one part of the output is a "ground truth" signal which is unaffected by the algorithms that process the data); in other possible incarnations, the complexity or resource requirements of a configuration may be factored into the evaluation function.

### PRUNING STEP:

As well as creating new nodes, it is necessary to periodically prune (remove) nodes from the DAG. This is because the hardware environment within which the invention operates has finite resources, and continuing to maintaining and evaluate solutions which are known to be ineffective will slow down and eventually preclude the discovery of more effective solutions.

Because candidate configurations may share nodes, it is not appropriate to prune ineffective configurations directly because this may result in the pruning of nodes which also belong to effective configurations. Therefore configuration scores are first used to derive node scores. Poorly scoring nodes are then pruned and any nodes and configurations which are dependent upon those nodes are pruned implicitly.

A node score is some function of the configuration scores of those configurations in which the node participates. In one incarnation of the invention, this function simply calculates the maximum of the configuration scores (or the minimum of the configuration ranks) of those configurations in which the node participates; in another incarnation, the function calculates the harmonic mean of the configuration ranks (i.e. the mean reciprocal rank, or MRR) of the configurations in which the node participates. A person skilled in the art will appreciate that it is possible to incorporate many other potentially effective functions without affecting the essence of the invention.

While some pruning is essential, it is necessary to retain a somewhat diverse selection of nodes and configurations because even though some of these may be ineffective, they may provide the basis of more effective configurations in future iterations. A person skilled in the art will appreciate that many potential strategies are available for deciding how much pruning should be done during each iteration. In one incarnation of the invention, a fixed minimum percentage (e.g. 25%) of the nodes are pruned (each time a node is pruned, all of its dependent nodes are pruned, and the pruning process continues until the fixed percentage has been reached or exceeded); in another incarnation of the invention, a fixed percentage (e.g. 25%) of configurations are pruned (each time a node and all of its dependent nodes are pruned, the number of configurations present is re-calculated, and the pruning process continues until the fixed percentage has been reached or exceeded); in other incarnations of the invention the degree of pruning may incorporate a measure of physical resource usage, or a random element.

### STOPPING CRITERIA:

The process comes to an end when some stopping criteria are met. Any meaningful stopping criteria may be used.

In one incarnation of the invention, the stopping criteria may be related to the present set of configuration scores, for example, when the configuration score or the median configuration score exceeds some pre-stated application-specific threshold; in another incarnation of the invention, the stopping criteria may be related to the change in the value of the criteria described by the previously described incarnation, for example, when the configuration scores cease to show significant improvement; in other incarnations of the invention, the process may be stopped after a fixed number of iterations, some fixed resource usage, or upon some manual intervention by a user.

### RELATIONSHIP TO PRIOR ART

The following is a description of prior-art most closely related to the present invention. While in each case there are some superficial similarities between the present invention and the prior art, in each case the present invention differs from the prior art in a number of fundamental ways, which are explained.

In US2012290867, "MATRIX COMPUTATION FRAMEWORK", the authors describe the use of a directed acyclic graph to represent a series of operations upon a matrix of values, each carried out by computer code hosted in the graph nodes. In the above cited work the graph is derived from a single pre-configured algorithm for which the intention is to find efficient execution strategies, whereas in the present invention no design or configuration is pre-supplied to the system, rather the intention is to *discover* effective configurations of pre-supplied modules; accordingly in the above cited work no method is described for generating the directed acyclic graph, whereas such a method is a key part of the present invention; in the above cited work the data being operated on are assumed to be in the form of matrix of numeric values, whereas in the present invention they are assumed to be in the form of an n dimensional array of values or object references with associated metadata; in the above cited work the nodes in the directed acyclic graph may themselves be comprised of directed acyclic graphs, whereas the present invention neither imposes nor supposes any such hierarchical structure.

In US2012246193, "DEPTH-FIRST SEARCH FOR TARGET VALUE PROBLEMS", the authors describe the use of a directed acyclic graph to find optimal or near-optimal solution paths. In the above cited work the graph is pre-configured to represent the space of all permissible solutions within which a solution is searched for, whereas in the present invention the solution space is effectively unbounded and nodes are added to and removed from the graph dynamically as part of the process; in the above cited work a solution is represented by a single path through the graph, whereas in the present invention a solution is represented by a directed acyclic graph forming a sub-graph, which may or may not be a single path; in the above cited work a single optimal solution is searched for, whereas in the present invention multiple solutions may be maintained; in the above cited work the key claims concern the depth-first traversal method by which solutions are evaluated, whereas in the present work we do not stipulate the specific traversal method by which solutions should be evaluated (though a reader skilled in the art would observe that a *breadth*-first approach may be a more natural fit for the present invention, owing to the above points of difference).

In US2013332449, "GENERATING DATA PROCESSING CODE FROM A DIRECTED ACYCLIC GRAPH", the authors describe the use of a directed acyclic graph to manage configurations of data processing modules. The above cited work concerns a system for representing, storing, retrieving and generating program code from specific configurations of data processing modules, whereas the present invention concerns a system for *discovering* configurations of modules; in the above cited work the graph represents a single configuration of data processing modules, whereas in the present invention it represents a plurality of configurations which may or may not share modules, and wherein any one configuration constitutes a sub-graph; in the above cited work the data to be operated on are assumed to be in tabular format with strictly-typed columns, whereas in the present invention they are assumed to be in the form of an n dimensional array of values or object references with associated metadata; in the above cited work the software modules are assumed to belong to a strongly-typed set corresponding to a vocabulary of well-known table operations, whereas in the present invention the modules are considered extensible and only required to adhere to general definitions of *algorithms* or *data-sources.*

In WO2005098647, "GENETIC ALGORITHM BASED SELECTION OF NEURAL NETWORK ENSEMBLE FOR PROCESSING WELL LOGGING DATA ", the authors describe the use of a genetic algorithm to select a solution which is an ensemble of neural networks. The above cited work concerns machine learning solutions constructed from ensembles of neural networks, whereas the present invention concerns much more general configurations of software modules; while a neural network and an ensemble of neural networks as described in the above cited work may both be considered to be limiting instances of a directed acyclic graph, the solution search process described in that work does not invoke nor depend on the concept of such a graph, whereas in the present invention the concept of such a graph is core to both the solution representation and described process.

## Claims

1. An *apparatus* and *process* for automatically discovering *configurations* of software *modules*; the *apparatus* comprising of:
a) one or more computer processors, directly or indirectly connected to
b) one or more digital storage devices encoding a plurality of software *modules* (1), each module being and *algorithm* (2) or a *data-source* (3), wherein each *data-source* produces as output an array of values or object references (9) with optional associated metadata (10, 11); and wherein each *algorithm* accepts as input an array of values or object references with optional associated metadata; and wherein any algorithm may produce as output an array of values or object references with optional associated metadata;
the computer processors and the plurality of *modules* also being directly or indirectly connected to
c) one or more digital storage devices encoding at least one *directed acyclic graph* (*DAG*) (4) wherein at some moment in time each root node of the *DAG* maintains an instance of a *module,* and wherein at some moment in time each non-root node (5) of the *DAG* maintains an instance of an *algorithm,* and wherein any connected sub-graph of the *DAG* whose root nodes are root nodes of the *DAG* may comprise a *configuration (8),* and wherein any node in the *DAG* may belong to any number of such *configurations*;
the *process* comprising of performing the following actions, iteratively, in some order, until some stopping condition is met:
a) adding any number nodes to the *DAG,* each comprising an instance of a module, such that any inputs of said module connect to the outputs of one or more modules hosted on existing nodes;
b) propagating some sample of data from the outputs of the modules hosted at each of any number of nodes in the *DAG,* to the inputs of the modules hosted at any number of said nodes' immediate downstream nodes;
c) estimating or computing a *node score* for each of any number of nodes in the *DAG,* or a *configuration score* for each of any number of *configurations* in the *DAG, or both;*
d) removing or de-activating any number of nodes or configurations in the *DAG,* based upon their associated *node scores or configuration scores.*

2. An apparatus and process according to claim 1, wherein the estimated or computed *node score* of any node in the *DAG* is based in whole or in part upon some estimated of computed *configuration score* for some or all of those *configurations* of which the node forms a part.

3. An apparatus and process according to claim 2, wherein the estimated or computed *configuration score* for any *configuration* is based in whole or in part upon a comparison of the output of certain nodes in that *configuration* with some desirable output or desirable output characteristic.

4. An apparatus and process according to claim 2 or 3, wherein the estimated or computed *configuration score* for any *configuration* is based in whole or in part upon some estimated or computed *configuration cost* for that configuration.

5. An apparatus and process method according to claim 4, wherein the estimated or computed *configuration cost* for any *configuration* is based in whole or in part upon some estimated or computed *node cost* for some or all of that *configuration's* component nodes.

6. An apparatus and process according to claim 4 or 5, wherein the estimated *node cost* or *configuration cost* are based in whole or in part upon some estimated or computed resource requirements of the corresponding node or *configuration.*

7. An apparatus and process according to any of claims 1 through 6, wherein the data that are propagated at any iteration of the method are formed from a sample of some larger set of data.

8. An apparatus and process according to any of claims 1 through 7, wherein the task of adding any node into the *DAG,* or attributing a module to any node, is delegated in whole or in part to one or more *algorithms* from the plurality of available *modules.*

9. An apparatus and process according to any of claims 1 through 8, wherein the addition of any node into the *DAG,* or the attribution of any *module* to any node in the *DAG,* or the delegation of such addition or attribution as per claim 8, is decided in whole or in part pseudo-randomly.

10. An apparatus and process according to any of claims 1 through 9, wherein the addition of any node into the *DAG,* or the attribution of any *module* to any node in the *DAG,* or the delegation of such addition or attribution as per claim 8, is based in whole or in part on *heuristic rules.*

11. An apparatus and process according to claim 10, wherein one or more *heuristic rules* directly or indirectly incorporate observations of the efficacy of one or more *configurations, modules* or parameters thereof in past settings, or wherein one or more *heuristic rules* directly or indirectly incorporate estimations or predictions of the efficacy of one or more *configurations, modules* or parameters thereof in the current setting.

12. An apparatus and process according to any of claims 1 through 11, wherein the arrays of data that comprise the input or output of one or more *modules,* are stored in some compressed or sparse form such as constitutes a conventional array in effect.
